Europäisches Patentamt

(19) European Patent Office

Office européen des brevets

(11) Publication number: **0 277 920**
**A1**

## (12) EUROPEAN PATENT APPLICATION

(21) Application number: 88830023.3

(22) Date of filing: 20.01.88

(51) Int. Cl.⁴: **A 47 J 37/12**
**F 24 C 15/20**

(30) Priority: 28.01.87 IT 931487    04.11.87 IT 953087

(43) Date of publication of application:
10.08.88 Bulletin 88/32

(84) Designated Contracting States:
AT BE CH DE ES FR GB GR LI LU NL SE

(71) Applicant: Batini, Catia Primetta
Via Pian di Casciana No. 1
I-55014 Marlia Capannori Lucca (IT)

Milani, Vanna
Via Billone
Cappella (Lucca) (IT)

(72) Inventor: Batini, Catia Primetta
Via Pian di Casciana No. 1
I-55014 Marlia Capannori Lucca (IT)

Milani, Vanna
Via Billone
Cappella (Lucca) (IT)

(74) Representative: Mannucci, Gianfranco, Dott.-Ing.
Ufficio Tecnico Ing. A. Mannucci Via della Scala 4
I-50123 Firenze (IT)

(54) Frying machine to be installed in public premises.

(57) The machine comprises: a cooking chamber (103) with pan (105) for the heated oil; a basket (118) that can be lifted and inclined; a hopper-shaped small door (114) for discharging a single batch into the basket partially sunk into the pan; a hopper (109) for delivering by fall the batch cooked and discharged from the lifted and inclined basket; and an apparatus (110) for purifying air from gases and vapours, with an aspirator which sucks from the cooking chamber (103) through a sucking hole (3), a rain filter having sieve-like that is cribrose walls and means for knocking down the residues.

Fig.1

**Description**

"FRYING MACHINE TO BE INSTALLED IN PUBLIC PREMISES"

The invention relates to a frying machine wherein oils are heated-up at high temperatures, thereby polluting and bad smelling gases, smoke and vapours are produced; this is a problem, especially when the machines must be installed in public premises wherein said smoke and vapours must not be dispersed, the dimensions are to be limited, and wherein suitable draughts for the application of aspirators able to expel gases outside, are often missing. In such cases, gases must be possibly eliminated by devices provided with activated carbon or similar filters. With the filtering members, washing members must often be associated, for the disposal of suspensions from the treated air, prior to the inlet thereof into the filters.

It is an object of the invention to provide a frying machine for supplying batches of extemporary cooked foodstuff, able to be installed in public premises and other, which substantially comprises in combination:

- a cooking chamber with pan for the oil that is kept heated therein;

- a basket that can be lifted and turned over, able to hold the batch to be cooked;

- a means for loading unitary batches to be cooked, able to make the batch fall into the basket partially sunk into the pan;

- a discharge hopper which receives, from the lifted and inclined basket, the cooked foodstuff batch for the delivery thereof; and

- an apparatus for purifying air from gases and vapours generated in said chamber, with sucking means to obtain vacuum conditions, water rain means for knocking down the residues and with sieve-like that is cribrose walls, and an adsorbing end filter of activated carbon type or of other type.

The basket may be articulated to and inclined about a horizontal axis, and may have a chute wall for the discharging into the hopper.

Said basket may be moved between a cooking position and a discharging lifted and inclined position, and may also take up an intermediate drain position.

Advantageously, the hopper is closed by a horizontal door that can be opened by lifting through the lifting of said basket. On a driving profile formed by said basket, an appendix of said horizontal door is made to rest, in order to achieve the lifting of the horizontal door and thus the opening of the hopper, together with the lifting and the inclination of the basket.

The purifying apparatus comprises a purifying duct under vacuum, developing between a sucking hole on the tope side of the cooking chamber and an aspirator which then pushes the air outwards through an end filter; in said duct, a rain washing zone is crossed by a thick curtain of a washing liquid rain, at least partially cooperating with sieve-like walls crossed by the air and on which the liquid is made to slide up to a basin for the collection of said liquid; the basin makes part of a tank for the accumulation and for the (mostly spontaneous) cooling of the washing liquid gathering therein; means for the forced circulation of said liquid are provided from said tank to a pressure chamber which makes up a manifold for forming the washing rain.

Advantageously, the washing zone is delimited by two vertical sieve-like that is cribrose walls which are transversally disposed in the duct under vacuum and are crossed by the gaseous mass to be purified; between said two walls, a pierced septum may be provided, greatly inclined with respect to the horizontal plane to intercept the free fall of drops, so as to reduce the kinetic energy and thereby preventing the formation of foam. On the sieve-like walls and on the pierced septum, liquid curtains are formed which cause an efficacious washing of the flow of air and smoke.

The vacuum duct has also, advantageously, a trap means for water and vapours, in the form of a cartridge made, for example, of glass fibres.

The invention will be better understood by following the description and the attached drawing, which shows a practical non limitative exemplification of the same invention. In the drawing:

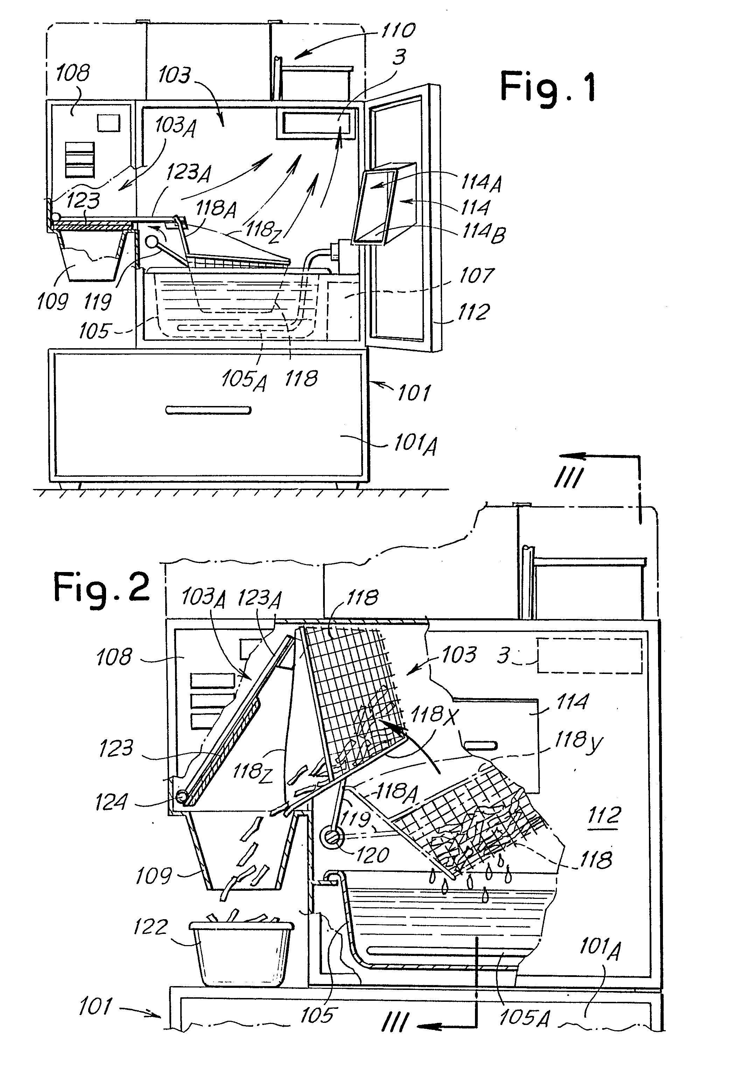

Figs. 1 and 2 show a front view and a similar enlarged view, both partially in section, of the assembly of a frying machine;

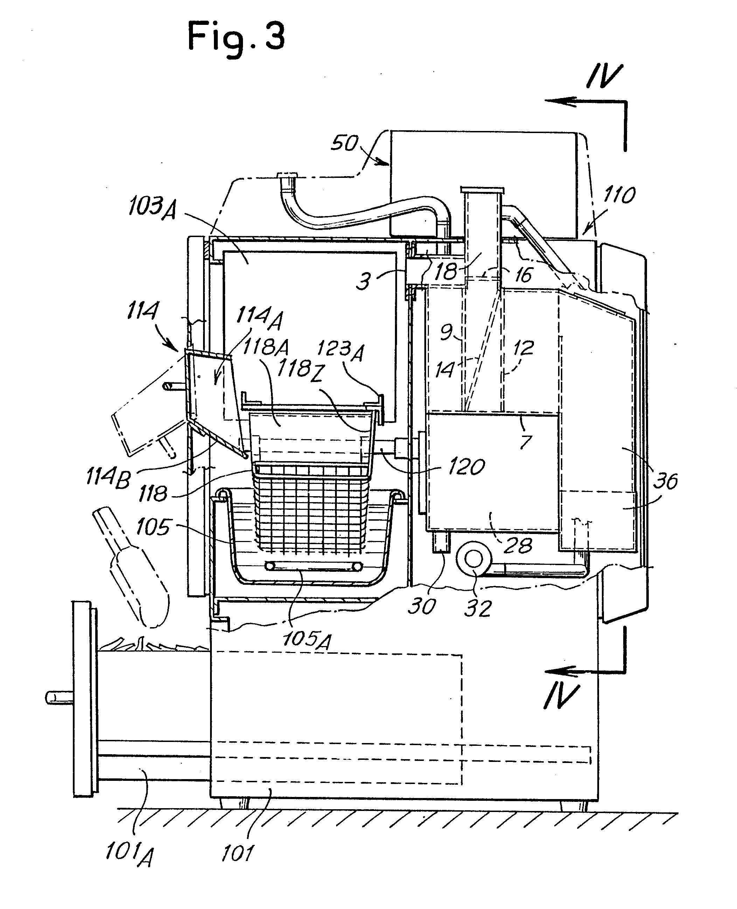

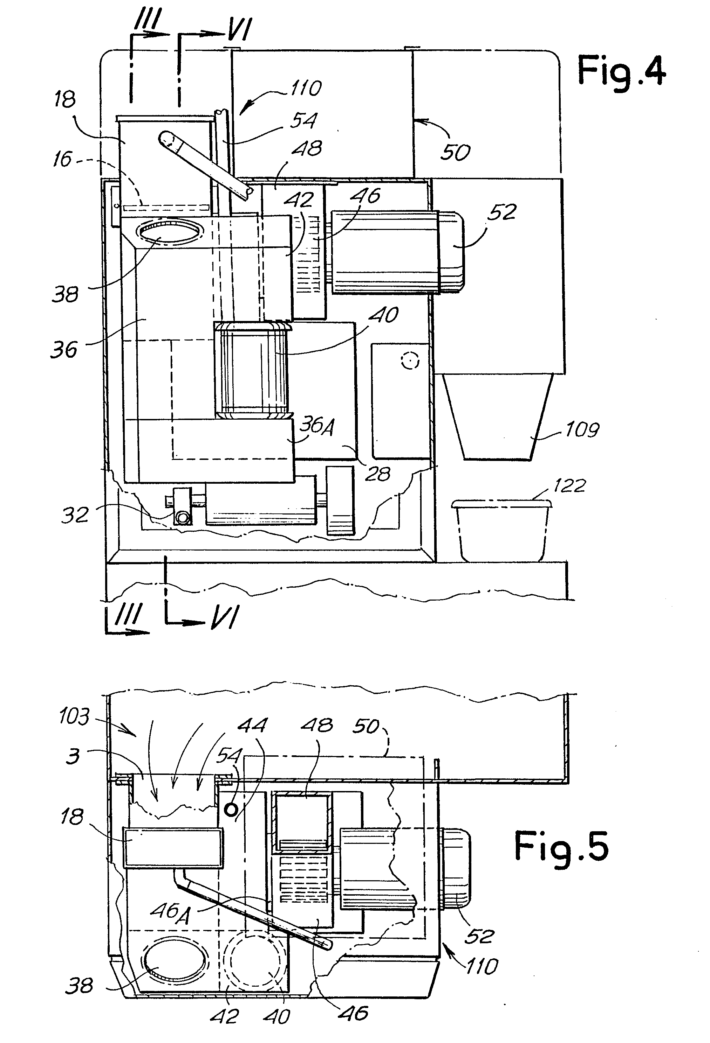

Fig. 3 is a view and partial section on line III-III of Figs. 2 and 4;

Figs. 4 and 5 show a view on line IV-IV of Fig. 3 and a plan view;

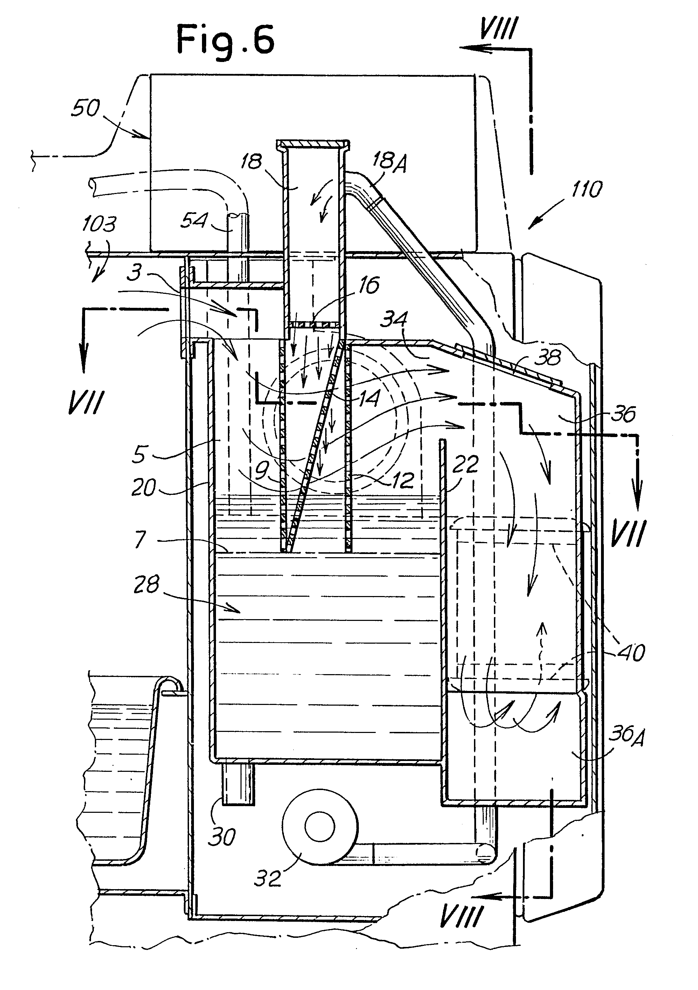

Fig. 6 shows an enlarged vertical section on line VI-VI of next Fig. 8;

Figs. 7 and 8 show sections on line VII-VII and VIII-VIII of Fig. 6.

According to what is illustrated in the attached drawing, the frying machine comprises a base 101 with a possible drawer container 101A for the foodstuff to be fried, such as already cut potatoes ready for cooking. A cooling system can possibly be provided for the product preservation. On the base 101 there are disposed: a cooking chamber 103 with a pan 105 and heating means 105A for the cooking oil; an operating group 107 on the side of the pan; a controls panel 108; a discharge hopper 109 below a high and lateral portion 103A of the cooking chamber 103; as well as a purifying apparatus 110 described in detail hereinbelow.

On the same side from which the drawer container 101A can be withdrawn, the cooking chamber 103 is made accessible by a door 112, in which a loading aperture is provided that can be closed by a small door 114; this small door 114 makes up a littler container 114A for a batch of the foodstuff to be introduced into the cooking chamber through the overturning of the small door into the closing position. When the small door 114 is closed, it makes up a chute with its wall 114B, inside the door 112; said chute 114B allows the discharging of said batch from the container 114A into a cooking basket 118 partially sunk into the pan 105; when the small door 114, 114A is caused to open, the wall 114B shuts the aperture and the small container 114A is ready to receive a foodstuff batch to be cooked from the outside.

The cooking basket 18 is shaped with an invitation, that is a flare, through an extended wall 118A and is supported through arms 119 by a traverse shaft 120 driven to perform alternative angular displacements by means of a motor contained in the group 107; in this way, the basket 118 may take up a lowered position of partial immersion in the heated oil held in the pan 105, above the heating means 105A, and a lifted and inclined position 118X such that, when it is reached, the contents of basket 118 is discharged along wall 118A into hopper 109; at an intermediate position during the lifting travel of basket 118, the shaft 120 may cause the basket itself to stop or even to perform a series of oscillations about a drain position 118Y lifted up above the oil, to make the oil drain prior to the discharge into hopper 109. From the hopper 109, the cooked foodstuff is collected into an underlying tray 122 that can be picked up by the consumer. The hopper 109 may be at least partially shut by a horizontal door 123 articulated at 124, that can be timely and temporarily open for the discharge, through a control derived from that of the basket, for example by the action of a profile 118Z of the basket 118, on which an arm 123A of door 123 is made to rest.

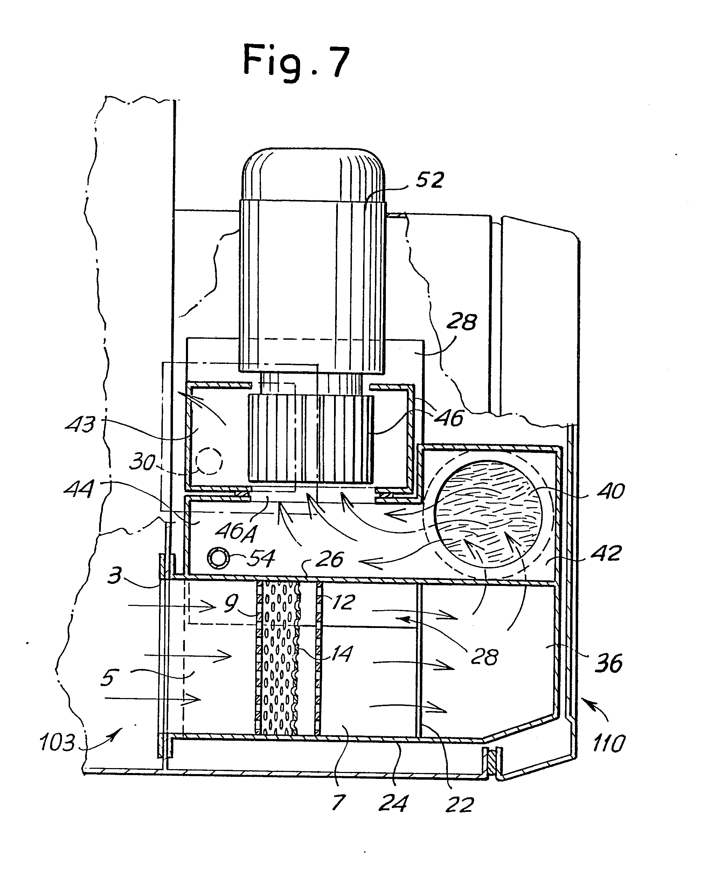

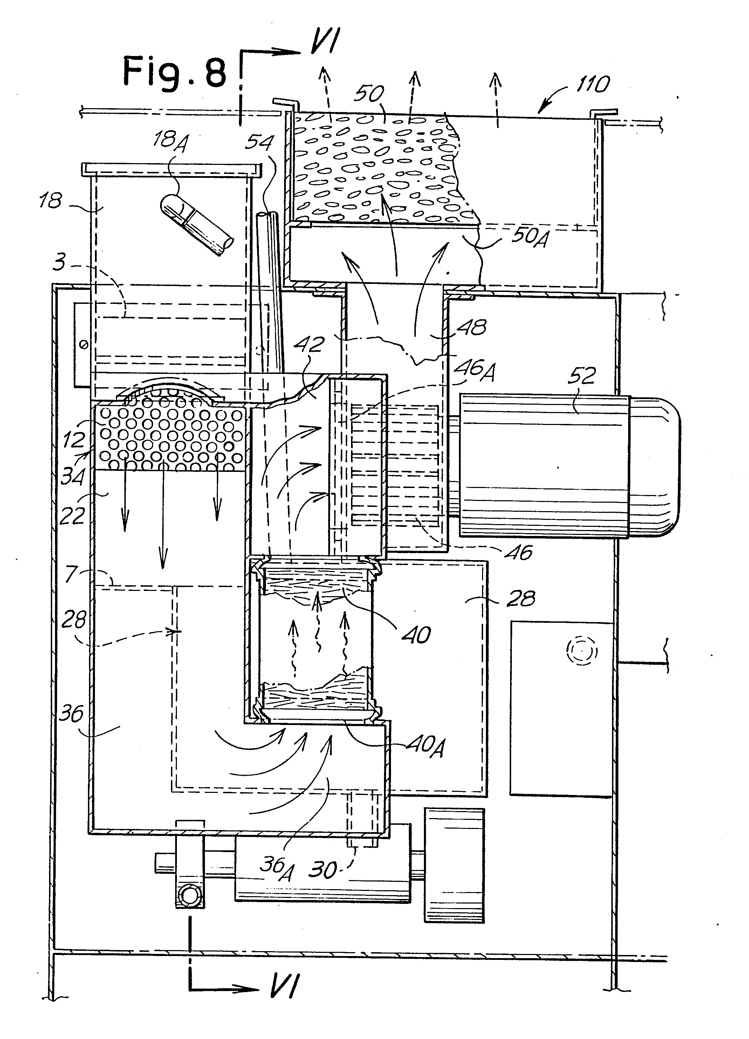

The apparatus, generically indicated by 110, for purifying air from smoke, that is, fumes and vapours of oils heated-up at high temperatures, has a sucking hole 3 for the withdrawal of the stuffy air to be purified, coming from chamber 103, 103A of the frying machine. Said sucking hole 3 leads into a chamber 5 under vacuum which is delimited in its lower part by a bottom 7 of a water tank. A vertical sieve-like that is cribrose wall 9 develops into said tank. A further vertical sieve-like wall 12 is disposed parallel and spaced to a limited extent from said wall 9, and between the two sieve-like walls 9 and 12 a further sieve-like septum 14 develops heavily inclined from the top part of wall 12 downwards and towards wall 9. The space included between the two sieve-like walls 9 and 12, and wherein the inclined septum 14 develops, is defined in its lower part by the basin-like bottom 7 and on the top by the bottom 16 of a manifold 18 of the liquid supplied by a pump and which is distributed in rain form through a plurality of small holes provided in the bottom 16 of same container, in order to cause a shower, i.e. a rain-like fall, of washing water. The washing water collects into the basin formed by the chamber 5 delimited by bottom 7, an outer wall 20, a wall 22 of limited height as well as by side panels 24, 26; walls 20, 22, 24 and 26 extend below the bottom 7 (having a partial development) to form a large tank 28 for the water, shaped as clearly shown in the drawing and, in particular, in Figs. 7 and 8, below and beyond the side panel 26. From tank 28 an intake 30 feeds a pump 32 for the water circulation, whose delivery reaches the fitting 18A of the manifold 18 which produces the water rain-like fall for the washing of smoke that is fumes.

The fumes which from chamber 103 enter the vacuum chamber 5 above the liquid free level within the basin with bottom 7 and making up the tank 28, are sucked through the sieve-like septa 9, 14 and 12, and thus washed by the rain coming from the sieve-like bottom 16 of manifold 18; the water of the washing rain collects into the basin delimited by bottom 7 and directly connected with tank 28 for the accumulation and cooling of the water (or of other washing liquid).

The vacuum chamber 5 has, on the opposite side of intake 3, a wide passage aperture 34 above wall 22; from this aperture 34 a duct 36 develops which is closed on top by an inclined wall having an inspection opening 38. Duct 36, from the bottom, through a horizontal deviation 36A reaches the lower mouth-piece 40A of a water and vapours trapping filter 40 in the form of a cylindrical, easily replaceable cartridge of a dehumidifying material, mostly made of glass fibres. The filter or cartridge 40 is upwardly crossed by the fumes that reach, through a fitting 42, 44, the sucking hole 46A of a centrifugal aspirator (or fan) 46; the delivery duct 48 of aspirator 46 develops upwards and reaches a manifold 50A for a filter 50 intended to knock down the smoke residues in order to allow the dispersion of the purified air into the room in which the machine is held. In particular, filter 50 knocks down the residues of formic and acrylic aldehydes (formaldehyde and acrolein) and other residues that have a polluting and bad smelling effect.

Numeral 52 indicates the motor for the driving of aspirator 46 and possibilty of pump 32 in case this is not provided with an independent motor of its own.

Numeral 54 indicates a pipe for loading water into the tank 28, developing from the top part of the assembly as far as the vertical wall for the upper closing of the portion of tank 28 which is shifted laterally with respect to chamber 5 under vacuum.

Obviously, the aspirator 46 puts under vacuum condition the cooking chamber 103 through hole 3, chamber 5, sieve-like walls 9, 14, 12, hole 34, duct 36, cartridge 40 and fitting 42, 44. The fan or aspirator 46 then pushes the partially purified and dehumidified fumes through the filter 50 for a further purifying and the disposal thereof in the environment.

The first smoke or fumes purification takes place by the rain washing through the fall from the sieve-like bottom 16 of the container or manifold 18. The rain dampens the two vertical walls 9 thus creating purification curtains through the holes of same walls 9 and 12 for an efficacious washing of fumes that go through the same holes. Moreover, the rain, by its falling down on the inclined septum 14, produces a further efficacious washing curtain for the fumes which go through the holes of same septum 14; besides, the kinetic energy of the falling water is damped for the presence of the septum 14 which intercepts, according to a very wide angle, the vertical trajectory of the liquid drops. The trend to the formation of foam which could otherwise develop on the free level of the liquid in the basin defined by walls 20, 22, 24 and 26 is thus avoided; on the contrary, even after a lengthy operation and with a limited regeneration of the water in the tank 28 (through the discharging pipe 54) there is no trend to foam formation and therefore, the operation of the first fumes purification system formed by septa 9, 14 and 12 is completely ensured even during a very lengthy operation of the machine.

The assembly includes access and inspection doors for the ordinary and extra maintenance and also the possibility is provided of withdrawing the septa, and, in particular, at least the septa 16 and 14 for periodical cleaning service.

It is understood that the drawing shows an exemplification given only as a practical demonstration of the invention, as this may vary in the forms and dispositions without nevertheless departing from the scope of the idea on which same invention is based.

## Claims

1. A frying machine for supplying batches of extemporary cooked foodstuff, to be installed in public premises and other, characterized in that it comprises in combination: a cooking chamber (103) with pan (105) for the oil kept heated therein; a basket (118) that can be lifted and overturned apt to contain the batches to be cooked; means (114, 114A) for the loading of unitary batches to be cooked, able to cause the falling of a batch into the basket (118) which is partially sunk into the pan (105); a discharge hopper (109) which receives, from the lifted and inclined basket (118), the batch of cooked foodstuff for the delivery thereof; and an apparatus (110) for cleaning air from gases and vapours generated in said chamber, comprising sucking means to obtain a vacuum regime, means for the washing and knocking down of the residues, and an adsorption end filter, of activated carbon type or of other type.

2) Frying machine according to claim 1, characterized in that the basket (118) is articulated at and can be inclined about a horizontal axis (120) and has a chute wall (118A) for the discharge into the hopper (109).

3) Frying machine according to claim 2, characterized in that the hopper (109) is closed by a closing means (123) that can be opened through the lifting of said basket (118, 118A).

4) Frying machine according to claim 2, characterized in that it comprises a shaft (120) defining the articulation axis and control means for said basket (118), to move said basket between a cooking position and a lifted discharge position, and to an intermediate drain position (118Y).

5) Frying machine according to claim 3, characterized in that the hopper (109) is closed by a horizontal door (123) that can be open by lifting through the lifting of said basket (118); said basket comprising a driving profile(118 Z)on which an appendix (123A) of said horizontal door (123) is made to rest, in order to achieve the lifting of the horizontal door (123) and thus the opening of the hopper (109), together with the lifting and the inclination of the basket (118).

6) Frying machine according to claim 1, characterized in that said purifying apparatus (110) comprises: a purifying duct under vacuum, extending between a sucking hole (3) from the upper part of the cooking chamber (103) and an aspirator (46), which then pushes the air outwards through an end filter (50); in said duct a chamber (5) forming a rain washing zone crossed by a thick curtain of washing liquid rain; sieve-like that is cribrose walls (9,14,12) crossed by the air and on which the washing liquid slides up to a collection basin formed by a tank (28) for said liquid, forming a tank for the accumulation and cooling of the washing liquid; and means for the forced circulation of said liquid from said tank (28) to a manifold (18) forming a pressure chamber with a bottom(16) provided with holes for the formation of the washing rain.

7. Frying machine according to claim 6, characterized in that: said washing zone is delimited by two vertical sieve-like walls (9,12) which are transversally disposed in said chamber (5) and are crossed by the gaseous mass to be purified; and that between said two walls a septum (14) being pierced and greatly inclined with respect to the horizontal is provided to intercept the free falling of the drops so as to reduce the kinetic energy and avoid the foam formation.

8. Frying machine according to claim 6, characterized in that the vacuum duct has a trap means for water and vapour, in the form of a replaceable cartridge (40), for example made of glass fibres.

0277920

Fig. 1

Fig. 2

Fig. 3

0277920

0277920

Fig.4

Fig.5

Fig.6

0277920

0277920

# Fig.7

0277920

**Fig. 8**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 489 647 (STAMPS)<br>* Whole document *<br>--- | 1,2,4,6 | A 47 J 37/12<br>F 24 C 15/20 |
| X | US-A-4 457 947 (SCHMIDT et al.)<br>* Whole document *<br>--- | 1,2,4,6 | |
| X | FR-A-2 563 927 (O.M.S. S.r.l.)<br>* Whole document *<br>--- | 1,2,4,6 | |
| X | US-A-3 818 820 (HARRIS)<br>* Whole document *<br>--- | 1,2,4,6 | |
| X | US-A-2 175 531 (KORTUM, Jr.)<br>* Whole document *<br>--- | 1,2,3,4 | |
| X | US-A-2 108 627 (TYLER)<br>* Whole document *<br>--- | 1,2,4,6 | |
| X | US-A-2 134 088 (OBDYKE)<br>* Whole document *<br>--- | 1,2,4 | |
| A | FR-A-2 478 484 (ETABLISSEMENTS WANSON)<br>* Whole document *<br>----- | 1,6 | TECHNICAL FIELDS SEARCHED (Int. Cl.4)<br><br>A 47 J |

The present search report has been drawn up for all claims

| Place of search | Date of completion of the search | Examiner |
|---|---|---|
| THE HAGUE | 29-04-1988 | SCHARTZ J. |